(19) Europäisches Patentamt
European Patent Office
Office européen des brevets

(11)  EP 1 890 126 B1

(12)  **EUROPÄISCHE PATENTSCHRIFT**

(45) Veröffentlichungstag und Bekanntmachung des Hinweises auf die Patenterteilung:
04.10.2017  Patentblatt 2017/40

(51) Int Cl.:
*G01N 1/28* (2006.01)

(21) Anmeldenummer: 07015491.9

(22) Anmeldetag: 07.08.2007

(54)  **Verfahren und Vorrichtung zum Schneiden und Sammeln von Dissektaten**

Method and device for cutting and collecting dissected specimens

Procédé et dispositif destinés à la coupe et à la collecte d'échantillons de dissection

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **11.08.2006  EP 06016816**

(43) Veröffentlichungstag der Anmeldung:
**20.02.2008  Patentblatt 2008/08**

(73) Patentinhaber: **Molecular Machines & Industries AG**
**8152 Glattbrugg (CH)**

(72) Erfinder: **Niehren, Stefan, Dr.**
**85250 Altomünster (DE)**

(74) Vertreter: **Hoffmann Eitle**
**Patent- und Rechtsanwälte PartmbB**
**Arabellastraße 30**
**81925 München (DE)**

(56) Entgegenhaltungen:
**WO-A-98/35216          WO-A-99/00658**
**WO-A2-01/33190        US-A1- 2006 087 643**
**US-A1- 2006 139 621**

**Beschreibung**

Gebiet der Erfindung

Die vorliegende Erfindung betrifft ein Verfahren zum Schneiden und Sammeln von Dissektaten aus Proben, sowie ein Laser-Dissektions-Mikroskop, das zum Einsatz dieses Verfahrens geeignet ist.

Stand der Technik

Bei der Laser-Mikrodissektion von insbesondere biologischen oder medizinischen Proben, wie zum Beispiel Gewebebiopsie-Proben, wird eine im allgemeinen 5-10 $\mu$m dicke Probe auf einen Objektträger eines Laser-Dissektions-Mikroskops gelegt und dann mithilfe eines fein fokussierten Laserstrahls einer IR-Laserdiode (z.B. einer AlGaAs-Laserdiode) Dissektate aus der Probe geschnitten. Hierzu wird ein transparenter thermoplastischer Übertragungsfilm über die Probe gelegt, der selektiv im infraroten Emissionsspektrum der Laserdiode absorbiert. Der Film wird vom Laserstrahl an wohl definierten Stellen aufgeschmolzen und haftet auf dem gewünschten zu schneidenden Teil der Probe (Dissektat) an. Das Dissektat kann beispielsweise aus einzelnen Zellen oder einer Gruppe von Zellen bestehen, die zur weiteren Analyse aus der Probe extrahiert werden müssen. In anderen Worten müssen die Dissektate, deren Größenordnung etwa 1-10 $\mu$m beträgt, nach dem Schneiden geeignet gesammelt werden. Hierbei ergeben sich insbesondere dann Probleme, wenn eine Vielzahl von Dissektaten geschnitten und gesammelt werden muss. Außerdem kommt es hierbei zu einer thermischen Beeinflussung der Probe, da der zum Schneiden eingesetzte IR-Laserstrahl Wärme auf die Probe überträgt und dadurch die Probe, in diesem Beispiel Zellen, beschädigen kann.

Im Stand der Technik sind verschiedene Verfahren bekannt, um die geschnittenen Dissektate aufzusammeln. So beschreibt zum Beispiel die DE 201 00 866 U eine Trägervorrichtung, die den Übertragungsfilm mit der Probe freigespannt in einem Rahmen trägt und aus der nach dem Schneiden mit dem Laserstrahl der Film mit dem Dissektat nach unten in einen Auffangbehälter herabfällt. Dieses Verfahren hat jedoch die folgenden Nachteile. Zum Einen ist dies die fehlende Referenzierbarkeit der Dissektate, da alle geschnitten Dissektate auf unkontrollierte Weise in einen Behälter fallen und somit nicht mehr ihren ursprünglichen Positionen zugeordnet werden können. Des weiteren können durch den lediglich schwerkraftbedingten freien Fall insbesondere kleine Dissektate für die Analyse verloren gehen, wenn sie aufgrund ihrer elektrostatischen Wechselwirkungen an Teilen des Mikroskops oder der Behälterwandung hängen bleiben.

Die US 5,998,129 beschreibt ein Laser-Mikrodissektions-Verfahren, in dem aus einer auf einem ebenen Objektträger aufgebrachten Gewebeprobe ein gewünschter Bereich z.B. Zellorganellen oder eine einzelne Zelle per Laserstrahl vom umgebenden Gewebe ausgeschnitten wird. Die sich noch auf dem Objektträger befindende isolierte Zelle wird mit einem zusätzlichen Laserimpuls entlang des Laserstrahls katapultiert und in einem Reaktionsbehälter aufgefangen. Durch den Impulsübertrag vom Laserstrahl fliegen die Dissektate auch hier auf unkontrollierte Weise in den Reaktionsbehälter und können nicht mehr referenziert werden. Große Dissektate lassen sich zudem nicht katapultieren und müssen zuvor zerlegt werden.

Ein weiteres bekanntes Verfahren umfasst die Verwendung einer Sammelhaftvorrichtung, eines so genannten Caps. Zunächst werden mehrere Dissektate aus der Probe geschnitten, dann wird das Cap auf die Probe abgesenkt und die Dissektate an dem Cap angehaftet. Das Cap mit den angehafteten Dissektaten wird im Mikroskop angehoben und herausgenommen. Zwar kann bei diesem Verfahren das Cap mehrere Dissektate aufnehmen und damit schneller arbeiten, jedoch besteht aufgrund der unterschiedlichen Größe und Form der Dissektate, der begrenzten Aufnahmefläche und Haftfähigkeit des Caps und der eventuellen Verkippung beim Anhaften, das Problem, dass die Cap-Fläche nur unzureichend ausgenutzt, was zu einer unvermeidlichen Verschwendung der teuren Caps führt. Werden andererseits mehrere Dissektate übereinander gestapelt, besteht die Gefahr, dass die Dissektate unkontrolliert herabfallen und verloren gehen. Hierdurch wird die Probenmenge auf dem Cap stark limitiert, was von Nachteil ist, da bei einigen Applikationen dann die Dissektate für die Analyse nicht ausreichen.

Aus der WO 01/33190 A2, ist ein Laser-Mikro-Dissektionsmikroskop gemäß dem Oberbegriff des Anspruchs 12 bekannt, das einen "Caplift" zum Aufnehmen, Verfahren (in der X-Y-Ebene) und Absenken eines Caps (Sammelhaftvorrichtung) auf von Objektträgern getragenes biologisches Material umfasst. Im hiervon durchgeführten Verfahren wird der Cap sowohl im abgesenkten Zustand mit dem Träger als auch im angehobenen Zustand in der horizontalen Ebene verfahren. Eine Festlegung des Caps im angehobenen Zustand relativ zur optischen Achse ist in diesem Verfahren hingegen nicht vorgesehen und entsprechend im Laser-Mikro-Dissektionsmikroskop weder steuerungstechnisch noch mechanisch umgesetzt.

Die US 2006/087643 A1 offenbart ebenfalls eine Vorrichtung sowie ein Verfahren zur Laser-Micro-Dissektion. Dabei werden ein Mikroskop sowie ein Handhabungssystem beschrieben, welches einen "Caplift" umfasst, um auf einem Verschiebetisch getragene Caps (Sammelhaftvorrichtungen) anzuheben bzw. abzusetzen. Die Caps werden sowohl beim Aufliegen auf einem Objektträger mit der biologischen Probe als auch im angehobenen Zustand in der X-Y-Richtung mithilfe des Caplifts verfahren.

Die WO 99/00658 A offenbart weiteren Stand der Technik.

Darstellung der Erfindung

Es ist somit eine Aufgabe der vorliegenden Erfindung, ein Verfahren sowie eine Vorrichtung zu entwickeln, welche die genannten Probleme löst, und somit ein kontaminationsfreies, sicheres, effizientes und kostengünstigen Sammeln von Dissektaten unterschiedlicher Größen ermöglicht, ohne die Probe zu beschädigen oder ein kompliziertes Konzept oder einen komplizierten Aufbau zu haben. Diese Aufgabe wird mit einem Verfahren mit den Merkmalen der folgenden Ansprüche 1 oder 2 sowie mit einer Vorrichtung mit den Merkmalen des Anspruchs 12 gelöst. Weitere vorteilhafte Ausführungsformen ergeben sich aus den abhängigen Ansprüchen. Ein erfindungsgemäßes Verfahren zum Schneiden und Sammeln von Dissektaten aus Proben umfasst die folgenden Schritte:

Aufbringen einer biologischen Probe auf einen Träger eines Laser-Dissektions-Mikroskops, der in seiner Ebene verfahrbar ist; Zentrieren einer angehobenen Sammelhaftvorrichtung auf die optische Achse; Verfahren des Trägers an eine Position P, an der das erste zu schneidende Dissektat in der optischen Achse liegt, Absenken der auf der optischen Achse zentrierten Sammelhaftvorrichtung auf die biologische Probe, wobei die Sammelhaftvorrichtung im abgesenkten Zustand auf der Probe anhaftet, frei mit dem Träger verfahrbar und von der optischen Achse des Mikroskops entkoppelt ist und im angehobenen Zustand relativ zur optischen Achse festgelegt ist; Schneiden eines oder mehrerer Dissektate aus der biologischen Probe, wobei, wenn das nächste zu schneidende Dissektat sich außerhalb eines vorbestimmten Sammelradius der Sammelhaftvorrichtung befindet, die folgenden Schritte durchgeführt werden: Anheben der Sammelhaftvorrichtung; Verfahren des Trägers an eine Position P-D relativ zur optischen Achse des Mikroskops, wobei die Mitte des nächsten zu schneidenden Dissektats von der optischen Achse des Mikroskops um einen Abstand D so dezentriert wird, dass nach Absenken der Sammelhaftvorrichtung das Dissektat nicht auf einen schon entnommenen Schnitt auf der Sammelhaftvorrichtung trifft; Absenken der Sammelhaftvorrichtung auf die biologische Probe; Verfahren des Trägers an eine vorbestimmte Position, an der das zu schneidende Dissektat in der optischen Achse liegt und Schneiden eines oder mehrerer nächster Dissektate, wobei nach jedem Anheben die Position P-D von sämtlichen zuvor bestimmten Positionen um mindestens den vorbestimmten Abstand D entfernt ist.

Alternativ umfasst das erfindungsgemäße Verfahren zum Schneiden und Sammeln von Dissektaten aus Proben, die folgenden Schritte: Aufbringen einer biologischen Probe auf einen Träger eines Laser-Dissektions-Mikroskops, der in seiner Ebene verfahrbar ist, Verfahren des Trägers an eine Position P, an der die zu schneidenden Dissektate in der optischen Achse liegen, Schneiden der Dissektate aus der biologischen Probe, und Sammeln der Dissektate durch Absenken einer auf der optischen Achse zentrierten Sammelhaftvorrichtung auf die biologische Probe, wobei die Sammelhaftvorrichtung im abgesenkten Zustand auf der Probe anhaftet, frei mit dem Träger verfahrbar und von der optischen Achse des Mikroskops entkoppelt ist und im angehobenen Zustand relativ zur optischen Achse festgelegt ist, wobei, wenn ein nächstes zu sammelndes Dissektat sich außerhalb eines vorbestimmten Sammelradius der Sammelhaftvorrichtung befindet, die folgenden Schritte durchgeführt werden: Anheben der Sammelhaftvorrichtung, Verfahren des Trägers an eine Position P-D relativ zur optischen Achse des Mikroskops, wobei die Mitte des nächsten zu sammelnden Dissektats von der optischen Achse des Mikroskops um einen Abstand D so dezentriert wird, dass nach Absenken der Sammelhaftvorrichtung das Dissektat nicht auf einen schon entnommenen Schnitt auf der Sammelhaftvorrichtung trifft, Absenken der Sammelhaftvorrichtung auf die biologische Probe, und Anhaften eines oder mehrerer nächster Dissektate an die Sammelhaftvorrichtung, wobei nach jedem Anheben die Position P-D von sämtlichen zuvor bestimmten Positionen um mindestens den vorbestimmten Abstand D entfernt ist.

Mit beiden Verfahren ist es möglich, die gesamte Haftfläche der Sammelhaftvorrichtung effizient zu nutzen, eine Dissektatstapelung zu vermeiden, und die Sammeleffizienz insgesamt zu erhöhen. Außerdem werden die oben genannten Nachteile des Stands der Technik, wie die thermische Beaufschlagung der Probe und das unkontrollierte Fliegen oder Fallen der Dissektate, mit den beiden Verfahren vermieden. Bei den erfindungsgemäßen Verfahren ist es bevorzugt, dass der Abstand D durch die Größe der Dissektate definiert ist. Da die Dissektate zumeist verschiedene Größen besitzen, kann zum Beispiel der vorbestimmte Abstand durch die mittlere Größe der zu schneidenden Dissektate definiert werden. Ebenso kann die maximale Größe hierzu verwendet werden. Mit dem erfindungsgemäßen Verfahren können somit alle Probengrößen geschnitten werden.

In einer vorteilhaften Ausgestaltung der erfindungsgemäßen Verfahren liegen die Positionen nacheinander auf einem spiralförmigen Weg. Dies erleichtert eine eindeutige Identifizierung der Dissektate und erlaubt eine hohe Dissektatdichte auf der Sammelhaftvorrichtung.

Die Sammelhaftvorrichtung liegt bevorzugt im abgesenkten Zustand plan auf der biologischen Probe auf. Dies verbessert die Haftung des Dissektats an der Sammelhaftvorrichtung, sorgt für eine größere Haftfläche und ermöglicht somit eine größere Sammelkapazität.

Es ist bevorzugt, dass die Sammelhaftvorrichtung im abgesenkten Zustand mit einem kontrollierten Anpressdruck auf der biologischen Probe aufliegt. Dadurch kann die Sammelleistung erhöht werden, wobei gleichzeitig Beschädigungen der Probe bzw. der Dissektate vermieden werden. Des weiteren wird die Planarität der Probe nicht gestört, so dass die Probe in der Bildebene des Mikroskops und der Schneidebene des Lasers bleibt.

In einer weiteren vorteilhaften Ausgestaltung wird/werden nach dem Schritt des Aufbringens der Probe das/die zu schneidenden Dissektat(e) vorbestimmt und nach einem beliebigen Schritt des Anhebens der Träger relativ zur Sammelhaftvorrichtung so verfahren, dass sich die Sammelhaftvorrichtung über einem Probenmaterial freien Bereich des Trägers befindet, wobei dann die Anzahl und/oder Fläche der geschnittenen Dissektate ermittelt und mit der Anzahl bzw. Fläche der vorbestimmten zu schneidenden Dissektate verglichen wird. Mit dieser Probeninspektion kann der Benutzer feststellen, ob die von ihm vorbestimmten Dissektate auch tatsächlich geschnitten und gesammelt wurden. Dies ist besonders bei kleinen Dissektaten oder bei einer großen Zahl von Dissektaten von Bedeutung. Hierbei bedeutet "vorbestimmt", dass die Anzahl der Dissektate, deren Größe, Form, Fläche und/oder Position oder ähnliches im voraus bestimmt oder festgelegt werden, beispielsweise mithilfe eines computergestützten graphischen Verfahrens.

Vorteilhafterweise umfasst das Vorbestimmen das Festlegen eines Grenzwerts für die Differenz der Anzahl und/oder Fläche zwischen vorbestimmter und ermittelter Anzahl bzw. Fläche der zu schneidenden Dissektate. Das Festlegen eines Grenzwerts ist insbesondere bei der Analyse von DNA, RNA und Proteinen sowie im Forensikbereich von Bedeutung, da die tatsächlich geschnittene und somit für die weitere Analyse zur Verfügung stehende Menge der Dissektate einen entscheidenden Einfluss auf das Analyseergebnis haben kann.

Es ist hierbei bevorzugt, den Schritt des Vergleichens mithilfe einer Bildanalysesoftware durchzuführen. Der Einsatz einer solchen Software ermöglicht eine vollständige Automatisierung der Probeninspektion und erhöht die Zuverlässigkeit und Prozesssicherheit des gesamten Sammel- und Schneidevorgangs.

In einer weiteren bevorzugten Ausführungsform der Erfindung wird die Sammelhaftvorrichtung nach dem Schritt des Vergleichens zurück über die Probe verfahren, um entsprechend der Vergleichsergebnisse nicht geschnittene oder nicht angehaftete Dissektate zu schneiden und an der Sammelhaftvorrichtung anzuhaften.

Es ist auch vorteilhaft, nach dem Schritt des Vergleichens unerwünschtes, nicht vorbestimmtes Probenmaterial durch Laserablation von der Sammelhaftvorrichtung zu entfernen. Dies führt zu einer weiteren Steigerung der Prozessgenauigkeit und -zuverlässigkeit.

Es ist zu verstehen, dass die oben genannte Probeninspektion selbstverständlich nicht nur auf einen Einsatz mit dem erfindungsgemäßen Verfahren zum Schneiden und Sammeln von Dissektaten nach den Ansprüchen 1 bis 6 beschränkt ist, sondern auch auf andere Laser-Dissektionsverfahren angewendet werden kann, bei denen biologische Proben geschnitten und gesammelt werden müssen.

Ein erfindungsgemäßes Laser-Dissektions-Mikroskop zur Durchführung des oben genannten Verfahrens zum Schneiden und Sammeln von Dissektaten aus Proben umfasst einen Träger zur Aufnahme einer biologischen Probe, wobei der Träger in seiner Ebene frei verfahrbar ist, eine Sammelhaftvorrichtung, die auf die biologische Probe auf dem Träger absenkbar und davon anhebbar ist und im abgesenkten Zustand auf der Probe anhaftet, einen Einstellmechanismus zur Zentrierung des Caps auf die optische Achse, und eine Höhenverstellung, mit Hilfe derer der Sammelhaftvorrichtung in Bezug auf den Träger höhenverstellt werden kann, wobei die Sammelhaftvorrichtung (111) mindestens zwei unterschiedliche Positionen einnehmen kann, einerseits eine obere, angehobene Position und anderseits eine untere, abgesenkte Position, wobei die Sammelhaftvorrichtung im abgesenkten Zustand frei mit dem Träger verfahrbar und von der optischen Achse des Mikroskops entkoppelt ist und im angehobenen Zustand relativ zur optischen Achse festgelegt ist.

Durch die freie Verfahrbarkeit im abgesenkten Zustand wird es dem Mikroskop ermöglicht, die Sammelhaftvorrichtung relativ zum Träger mit der Probe gezielt und kontrolliert zu positionieren und somit die Sammelhaftvorrichtung effizient auszunutzen.

Bevorzugt umfasst das erfindungsgemäße Laser-Dissektions-Mikroskop ferner einen Magneten zum Steuern des Anpressdrucks der Sammelhaftvorrichtung. Eine besonders feine Dosierung des Anpressdrucks kann auf diese Weise realisiert werden.

In einer besonders vorteilhaften Ausführungsform ist der Magnet frei dosierbar, so dass der relative Abstand der Sammelhaftvorrichtung zur Probe eingestellt werden kann. Die gesammelten Dissektate auf dem Cap (Sammelhaftvorrichtung) können so zum Beispiel im Zuge der Prozesskontrolle bis knapp über die Probe abgesenkt werden und visuell ohne Anhaften an die Probe beobachtet werden.

Es ist vorteilhaft, wenn beim erfindungsgemäßen Laser-Dissektions-Mikroskop der Abstand zwischen Sammelhaftvorrichtung und Probe einstellbar ist. Somit ist es möglich, zum Beispiel zu Kontrollzwecken die Sammelhaftvorrichtung knapp über die Probe abzusenken, ohne diese jedoch zu berühren. Die Sammelhaftvorrichtung kann dann praktisch in Fokus mit dem Mikroskop visuell beobachtet werden, ohne dass ein Kontakt mit der Probe die Beobachtung beeinträchtigt.

Weiter ist bevorzugt, dass das Laser-Dissektions-Mikroskop mehrere Sammelhaftvorrichtungen oder ein oder mehrere Sammelhaftvorrichtungs-Arrays umfasst. Es können dadurch mehrere Gruppen von Dissektaten nacheinander abgearbeitet werden, ohne dass ein Benutzereingriff zum Wechseln der Sammelhaftvorrichtung die Dissektion unterbricht.

<u>Kurze Beschreibung der Zeichnungen</u>

Figur 1a zeigt eine Seitenansicht eines Laser-Dissektions-Mikroskops entsprechend einer Ausführungsform der Erfindung;

Figur 1b zeigt eine Vorderansicht des Mikroskops der Figur 1;

Figur 2a zeigt eine Teil-Schnittansicht von oben eines Caplift-Moduls des Mikroskops der Figur 1;

Figur 2b zeigt seitliche Teil-Schnittansicht des Caplift-Moduls der Figur 2a;

Figur 2c zeigt eine Teil-Schnittansicht von vorne des Caplift-Moduls der Figur 2a;

Figur 3 zeigt ein Flussdiagramm, das das eine Ausführungsform der erfindungsgemäßen Verfahrens darstellt; und

Figur 4 zeigt ein Schema eines Gitterrasters, mit dem der Cap zur Aufnahme der Dissektate der unterteilt wird.

<u>Wege zur Ausführung der Erfindung</u>

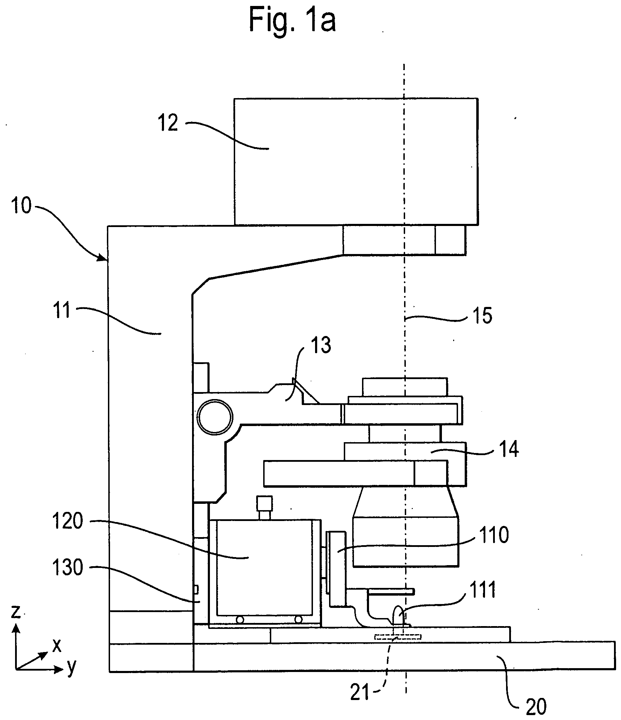

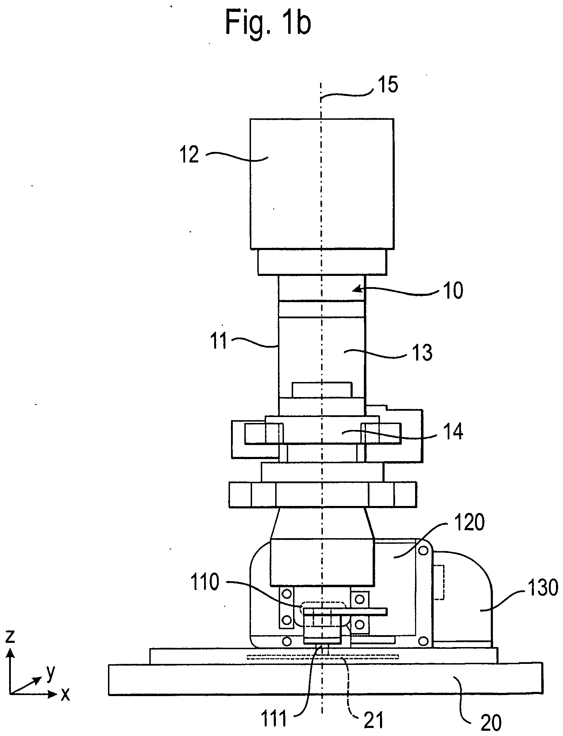

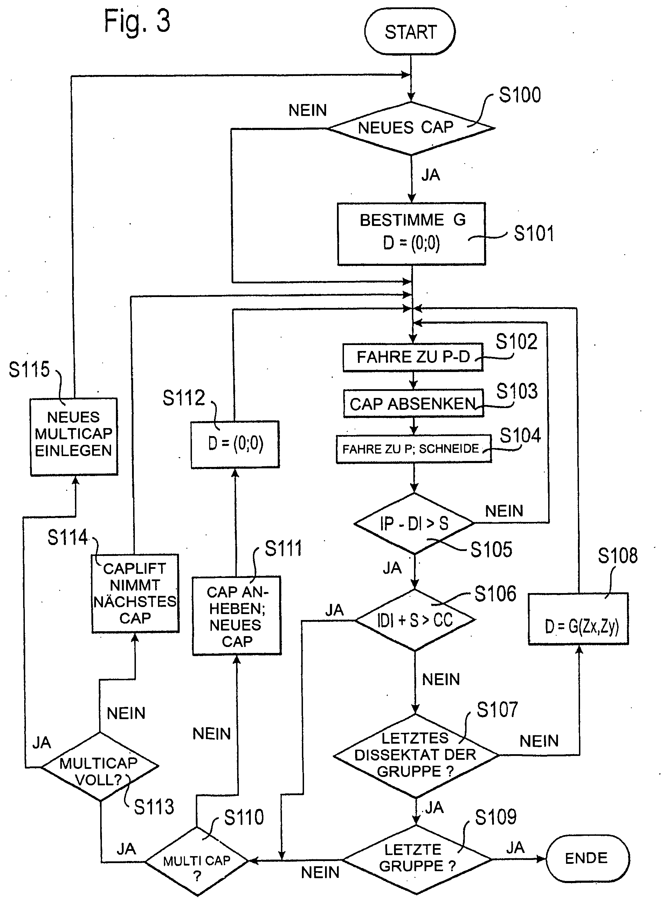

In Figur 1a und 1b ist ein Laser-Mikrodissektions-Mikroskop entsprechend einer Ausführungsform der vorliegenden Erfindung gezeigt. Es umfasst eine Mikroskop-Beleuchtungseinheit 10, die aus einem Beleuchtungsarm 11, einem Lampengehäuse 12 mit Filter und Lampe sowie einem am Beleuchtungsarm angebrachten Kondensorhalter 13 mit Kondensor 14 besteht. Im unteren Teil des Mikroskops befindet sich ein in der xy-Ebene verschiebbarer Tisch 20, auf dem der Objektträger 21 mit der Probe 22 befestigt ist. Die optische Achse des Mikroskops ist strichpunktiert gezeigt und mit der Bezugsziffer 15 bezeichnet.
Unter dem Kondensorhalter 13 befindet sich das Caplift-Modul, das als wesentliche Elemente den Caplift 120, den Caplift-Arm 110 und den eigentlichen Cap 111 (Sammelhaftvorrichtung) enthält. Der Caplift 120 ist über den Caplifthalter 130 am Beleuchtungsarm 11 des Mikroskops angebracht.

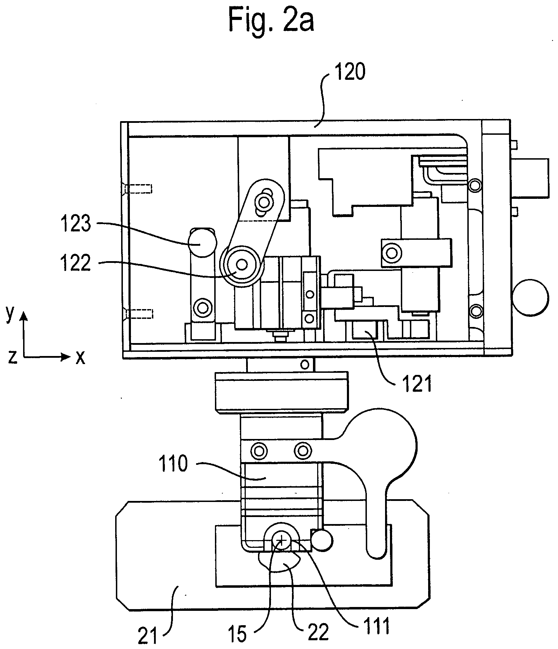

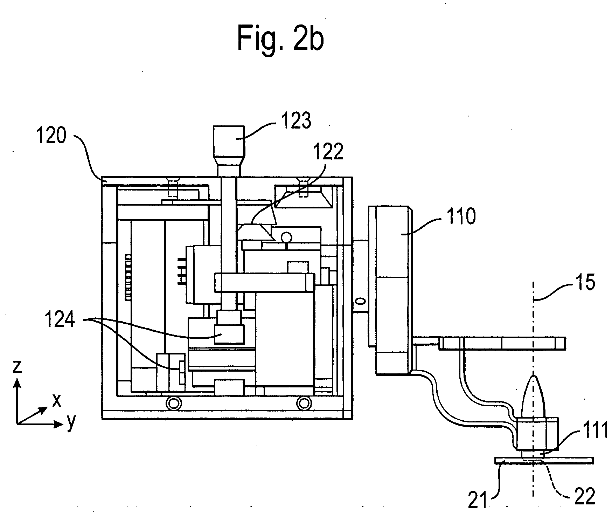

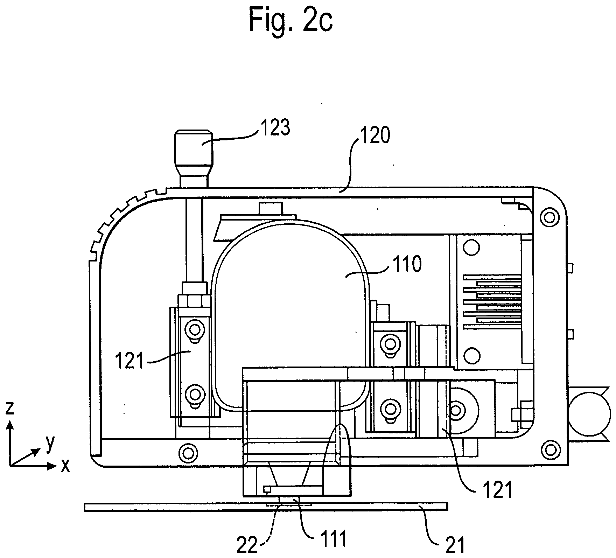

Die Figuren 2a, 2b und 2c zeigen im Detail den Aufbau des Caplift-Moduls. Im Inneren des Caplifts 120 befinden sich die Höhenverstellung 121, mit Hilfe derer der Caplift-Arm 110 in Bezug auf xy-Tisch 20 höhenverstellt werden kann. Die Bezugsziffer 122 bezeichnet den Einstellmechanismus zur Zentrierung des Caps auf die optische Achse 15 des Mikroskops und die Bezugsziffer 123 bezeichnet die Steuereinrichtung des Anpressdrucks des Caps auf die Probe, welche die Position der Magnete 124 einstellt.
Der Caplift-Arm 110 kann mindestens zwei unterschiedliche Positionen einnehmen, einerseits eine obere, angehobene Position und anderseits eine untere, abgesenkte Position, sowie eine oder mehrere Schwebepositionen, in denen das Cap die Probe nicht berührt. In der oberen Position ist der Caplift-Arm 110 relativ zur optischen Achse 15 des Mikroskops fixiert, während er in der unteren Position und in den Schwebepositionen von der optischen Achse entkoppelt ist. Der Caplift-Arm 110 ist in dieser Position in der x und y-Richtung frei beweglich. Dies ist notwendig damit der Caplift-Arm 110 mit dem Cap 111 beim Schneiden und Bewegen des xy-Tisches 20 ungestört mitfahren kann. Das einstellbare Freispiel (maximaler Verfahrweg) beträgt bis zu +/-10 mm. Innerhalb dieses Freispiels liegt der Cap 111 immer Plan auf der Probe 22 auf bzw. schwebt parallel über ihr. Wird das eingestellte Freispiel überschritten, kann eine Steuerung (nicht gezeigt) den Cap 111 automatisch anheben.
Im folgenden wird eine Ausführungsform des erfindungsgemäßen Verfahrens anhand des Flussdiagramms der Figur 3 dargestellt.
Zu Beginn des Verfahrens (S100) wird zunächst geprüft, ob ein neues, unbenutztes Cap verwendet wird, und wenn ja werden in die Steuerung die Mittenpositionen und Schnittlinien einer oder mehrerer Gruppen zu schneidender Dissektate eingegeben. Die Steuerung kennt außerdem weitere Parameter wie z.B. den Sammelradius S des Caps. Innerhalb eines vom Benutzer definierten Sammelradius S werden alle Proben ohne Anheben des Caps geschnitten. Befinden sich noch weitere zu schneidende Dissektate auf der Probe, sind jedoch außerhalb des Sammelradius S, muss der Caplift angehoben und neu positioniert werden.
Es wird nun ein virtuelles Gitter mit Gitterweite G dem Cap überlagert (S101). Die Gitterkonstante G richtet sich nach der mittleren Größe der zu schneidenden Objekte (Dissektate) in der jeweiligen Gruppe und wird festgelegt als ein vom Benutzer gewähltes Vielfaches $Q$ der Summe aus mittleren Durchmesser $d_{ave}$ der in der Gruppe definierten Dissektate und der doppelten Varianz der Durchmesser, $\sigma_d$:

$$G = Q * (d_{ave} + 2\sigma_d).$$

Bei einem noch unbenutzten Cap, an dem noch keine Dissektate anhaften, wird der angehobene Cap 111 auf die optische Achse 15 des Mikroskops zentriert, d.h. man setzt die Distanz $D = (0;0)$ und nutzt die Gitterzelle $(0,0)$. In anderen Worten wird das erste Dissektate im Zentrum des Caps angehaftet. Der Objektträger wird nun entsprechend den Schnittlinien und Mittenpositionen auf die den Dissektaten entsprechenden Dissektatpositionen $P$ gefahren (S102 mit $D = (0;0)$).

Befindet sich eine Position $P$ jedoch außerhalb des Sammelradius $S$, so muss der Cap neu positioniert werden. In diesem Falle wird das (nächste) zu schneidende Objekt auf eine neue Gitterzellenposition $P-D$ bewegt (S102). Die Mitte des Dissektats liegt nun nicht in der optischen Achse 15, sondern ist von ihr um eine Distanz $D = (Dx;Dy)$ beabstandet. Der Abstand $D$ (Gitterversatz) kann auf verschiedene Weisen bestimmt werden, von denen eine weiter unten dargestellt ist. Bedingung hierfür ist, dass das Dissektat nicht auf einen schon entnommenen Schnitt auf dem Cap 111 trifft, also dass die neue Position um die Gitterkonstante von der alten entfernt ist. Der Capversatz $D$ wird hierbei entsprechend der Zellenindices $(Zx; Zy)$ berechnet,

$$D = (G*Zx; G*Zy).$$

Der Cap 111 wird dann in die untere Position abgesenkt (S103). Jetzt erst wird das Zentrum des Dissektats durch Bewegen des xy-Tischs 20 in die optische Achse 15 (Laser) verfahren und die nächsten Objekte mit aufliegenden Cap geschnitten (S104). Damit wird der Cap genau um die kontrollierte Distanz D von der Mitte des Dissektats dezentriert.

Wenn das nächste zu schneidende Dissektat außerhalb des Sammelradius des Caps liegt, d.h. wenn $|P-D| > S$ (S105), dann wird, falls das Cap noch nicht voll ist, $|D| + S > CC$ (S106), und das letzte Dissektat der Gruppe noch nicht geschnitten wurde (S107), das Cap angehoben und die nächste Gitterzelle verwendet (S108). Der Parameter CC entspricht hierbei der Kapazität des Caps. Diese *Cap Capacity* ist ein Maß für die maximal nutzbare Fläche des Caps und wird bestimmt durch das Minimum des Freispiels *FR* des Caps und der nutzbaren Klebefläche *KF* des Caps (*CC* = min(*FR, KF*)). In anderen Worten, wenn der Cap um mehr als die nutzbare *Cap Capacity* verfahren werden muss, um den Gitterversatz zu realisieren, wird angenommen, dass der Cap voll ist (siehe S106). In diesem Fall muss das Cap angehoben werden und ein neues Cap am Caplift-Arm 110 angebracht werden (S111). Das neue Cap wird dann wieder in die optische Achse zentriert (S112).

In weiteren Ausgestaltungsmöglichkeiten der Erfindung, die ebenfalls im Diagramm der Figur 3 berücksichtigt sind, werden mehrere Gruppen von Dissektaten geschnitten. Hierbei können so genannte Multicapsysteme eingesetzt werden, die aus mehreren gleichzeitig auf dem Caplift-Arm 110 gehaltenen Caps bestehen. Ist das gerade im Einsatz befindliche Cap voll (S106), oder das letzte Dissektat einr Gruppe geschnitten (S107) und die letzte Gruppe noch nicht abgearbeitet (S109), so kann das vorhandene Multicapsystem (S110) für die nächste zu schneidende Gruppe ein neues Cap verwenden (S114). Auch hier wird geprüft, ob sämtliche Caps des Multicapsystems bereits voll sind (S113), und falls ja, wird aufgefordert, ein neues Multicapsystem einzulegen (S115).

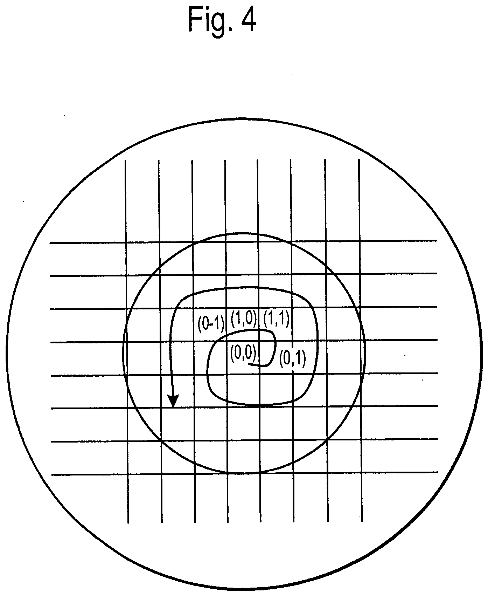

In der hier dargestellten Ausführungsform des Verfahrens werden die Positionen (Gitterzellen) entlang eines spiralförmigen Wegs vom Objektträger abgefahren. Dies ist beispielhaft in Figur 4 gezeigt. Hierbei berechnen sich die aktuellen Zellenindizes $Z=(Zx,Zy)$ zu

```
N=0;  Z=(0,0)
Do  N=N+1
{
        erhöhe Zx um 1 bis Zx==N
        erhöhe Zy um 1 bis Zy==N
        verringere Zx um 1 bis Zx==-N
        verringere Zy um 1 bis Zy==-N
}
D = (G*Zx, G*Zy).
```

**Patentansprüche**

1. Verfahren zum Schneiden und Sammeln von Dissektaten aus Proben, mit den folgenden Schritten:

   Aufbringen einer Probe auf einen Träger eines Laser-Dissektions-Mikroskops, der in seiner Ebene verfahrbar ist,
   Zentrieren einer angehobenen Sammelhaftvorrichtung (111) auf die optische Achse (15),
   Verfahren (S102) des Trägers an eine Position P, an der das erste zu schneidende Dissektat in der optischen Achse liegt,
   Absenken (S103) der auf der optischen Achse (15) zentrierten Sammelhaftvorrichtung (111) auf die Probe, wobei die Sammelhaftvorrichtung im abgesenkten Zustand auf der Probe anhaftet, frei mit dem Träger verfahrbar und von der optischen Achse des Mikroskops entkoppelt ist und im angehobenen Zustand relativ zur optischen Achse festgelegt ist,
   Schneiden (S104) eines oder mehrerer Dissektate aus der Probe, wobei, wenn das nächste zu schneidende Dissektat sich außerhalb eines vorbestimmten Sammelradius (S) der Sammelhaftvorrichtung befindet, die folgenden Schritte

   durchgeführt werden:

   Anheben der Sammelhaftvorrichtung,
   Verfahren (S102) des Trägers an eine Position P-D relativ zur optischen Achse des Mikroskops, wobei die Mitte des nächsten zu schneidenden Dissektats von der optischen Achse des Mikroskops um einen Abstand D so dezentriert wird, dass nach Absenken der Sammelhaftvorrichtung das Dissektat nicht auf einen schon entnommenen Schnitt auf der Sammelhaftvorrichtung trifft,
   Absenken (S103) der Sammelhaftvorrichtung auf die Probe,
   Verfahren des Trägers an eine vorbestimmte Position, an der das zu schneidende Dissektat in der optischen Achse (15) liegt und
   Schneiden (S104) eines oder mehrerer nächster Dissektate,
   wobei nach jedem Anheben die Position P-D von sämtlichen zuvor bestimmten Positionen um mindestens den Abstand D entfernt ist.

2. Verfahren zum Schneiden und Sammeln von Dissektaten aus Proben, mit den folgenden Schritten:

   Aufbringen einer Probe auf einen Träger eines Laser-Dissektions-Mikroskops, der in seiner Ebene verfahrbar ist,
   Verfahren des Trägers an eine Position P, an der die zu schneidenden Dissektate in der optischen Achse liegen,
   Schneiden der Dissektate aus der Probe, und
   Sammeln der Dissektate durch Absenken einer auf der optischen Achse zentrierten Sammelhaftvorrichtung auf die Probe, wobei die Sammelhaftvorrichtung im abgesenkten Zustand auf der Probe anhaftet, frei mit dem Träger verfahrbar und von der optischen Achse des Mikroskops entkoppelt ist und im angehobenen Zustand relativ zur optischen Achse festgelegt ist,
   wobei, wenn ein nächstes zu sammelndes Dissektat sich außerhalb eines vorbestimmten Sammelradius der Sammelhaftvorrichtung befindet, die folgenden Schritte durchgeführt werden:

Anheben der Sammelhaftvorrichtung,
Verfahren des Trägers an eine Position P-D relativ zur optischen Achse des Mikroskops, wobei die Mitte des nächsten zu sammelnden Dissektats von der optischen Achse des Mikroskops um einen Abstand D so dezentriertwird, dass nach Absenken der Sammelhaftvorrichtung das Dissektat nicht auf einen schon entnommenen Schnitt auf der Sammelhaftvorrichtung trifft,
Absenken der Sammelhaftvorrichtung auf die Probe, und
Anhaften eines oder mehrerer nächster Dissektate an die Sammelhaftvorrichtung,

wobei nach jedem Anheben die Position P-D von sämtlichen zuvor bestimmten Positionen um mindestens den Abstand D entfernt ist.

3. Verfahren nach Anspruch 1 oder 2, wobei der Abstand D durch die maximale Größe der Dissektate definiert ist.

4. Verfahren nach Anspruch 1, 2 oder 3, wobei die Positionen nacheinander auf einem spiralförmigen Weg liegen.

5. Verfahren nach einem der vorangehenden Ansprüche, wobei die Sammelhaftvorrichtung im abgesenkten Zustand plan auf der Probe aufliegt.

6. Verfahren nach einem der vorangehenden Ansprüche, wobei die Sammelhaftvorrichtung im abgesenkten Zustand mit einem kontrollierten Anpressdruck auf der Probe aufliegt.

7. Verfahren nach einem der vorangehenden Ansprüche, wobei nach dem Schritt des Aufbringens der Probe die zu schneidenden Dissektate vorbestimmt werden und nach einem beliebigen Schritt des Anhebens der Träger relativ zur Sammelhaftvorrichtung so verfahren wird, dass sich die Sammelhaftvorrichtung über einem Probenmaterial freien Bereich des Trägers befindet, wobei dann die Anzahl und/oder Fläche der geschnittenen Dissektate ermittelt und mit der Anzahl bzw. Fläche der vorbestimmten zu schneidenden Dissektate verglichen wird.

8. Verfahren nach Anspruch 7, wobei das Vorbestimmen das Festlegen eines Grenzwerts für die Differenz der Anzahl und/oder Fläche zwischen vorbestimmter und ermittelter Anzahl bzw. Fläche der zu schneidenden Dissektate umfasst.

9. Verfahren nach Anspruch 7 oder 8, wobei der Schritt des Vergleichens mithilfe einer Bildanalysesoftware durchgeführt wird.

10. Verfahren nach einem der Ansprüche 7 bis 9, wobei die Sammelhaftvorrichtung nach dem Schritt des Vergleichens zurück über die Probe verfahren wird, um entsprechend der Vergleichsergebnisse nicht geschnittene oder nicht angehaftete Dissektate zu schneiden und an der Sammelhaftvorrichtung anzuhaften.

11. Verfahren nach einem der Ansprüche 7 bis 10, wobei nach dem Schritt des Vergleichens unerwünschtes, nicht vorbestimmtes Probenmaterial durch Laserablation von der Sammelhaftvorrichtung entfernt wird.

12. Laser-Dissektions-Mikroskop zur Durchführung des Verfahrens zum Schneiden und Sammeln von Dissektaten aus Proben nach Anspruch 1 oder 2, umfassend
einen Träger (21) zur Aufnahme einer bevorzugt biologischen Probe (22), wobei der Träger in seiner Ebene frei verfahrbar ist,
eine Sammelhaftvorrichtung (111), die auf die Probe auf dem Träger absenkbar und davon anhebbar ist und im abgesenkten Zustand auf der Probe anhaftet,
einen Einstellmechanismus (122) zur Zentrierung des Caps auf die optische Achse (15), und
eine Höhenverstellung (121), mit Hilfe derer die Sammelhaftvorrichtung (111) in Bezug auf den Träger (21) höhenverstellt werden kann, wobei die Sammelhaftvorrichtung (111) mindestens zwei unterschiedliche Positionen einnehmen kann, einerseits eine obere, angehobene Position und anderseits eine untere, abgesenkte Position,
**dadurch gekennzeichnet, dass** die Sammelhaftvorrichtung (111) im abgesenkten Zustand frei mit dem Träger verfahrbar und von der optischen Achse (15) des Mikroskops entkoppelt ist und im angehobenen Zustand relativ zur optischen Achse (15) festgelegt ist.

13. Laser-Dissektions-Mikroskop nach Anspruch 12, ferner einen Magnet (124) zum Steuern des Anpressdrucks der Sammelhaftvorrichtung (111) umfassend.

**14.** Laser-Dissektions-Mikroskop nach Anspruch 13, wobei der Magnet (124) frei dosierbar ist, so dass der relative Abstand der Sammelhaftvorrichtung zur Probe (22) eingestellt werden kann.

**15.** Laser-Dissektions-Mikroskop nach Anspruch 12, 13 oder 14, wobei der Abstand zwischen Sammelhaftvorrichtung (111) und Probe (22) einstellbar ist.

**16.** Laser-Dissektions-Mikroskop nach einem der Ansprüche 12 bis 15, weiter mehrere Sammelhaftvorrichtungen oder ein Sammelhaftvorrichtungs-Array umfassend.

**Claims**

**1.** Method for cutting and collecting dissected pieces from specimens, having the following steps:

mounting a specimen on a slide of a laser dissection microscope, which is movable in its plane,
centring a raised collecting and adhesion device (111) on the optical axis (15),
moving (S102) the slide to a position P at which the first piece to be cut is located in the optical axis,
lowering the collecting and adhesion device (111), which is centred on the optical axis (15), onto the specimen, wherein the collection and adhesion device in the lowered state sticks to the specimen, is freely movable with the slide and is uncoupled from the optical axis of the microscope, and in the raised state is fixed relative to the optical axis,
cutting (S104) one or more pieces out of the specimen, wherein, when the next piece to be cut is located outside a given collecting radius (S) of the collecting and adhesion device, the following steps are performed:

raising the collecting and adhesion device,
moving (S102) the slide to a position P-D relative to the optical axis of the microscope, wherein the centre of the next piece to be cut is placed off-centre from the optical axis of the microscope by a distance D such that, after lowering of the collecting and adhesion device, the dissected piece does not encounter a section which has already been removed on the collecting and adhesion device,
lowering (S103) the collecting and adhesion device onto the specimen,
moving the slide to a predetermined position at which the piece to be cut is located in the optical axis (15) and cutting (S104) one or more of the next pieces,

wherein, after each time the device is raised, the position P-D is remote from all previously defined positions by at least the distance D.

**2.** Method for cutting and collecting dissected pieces from specimens, having the following steps:

mounting a specimen on a slide of a laser dissection microscope, which is movable in its plane,
moving the slide to a position P at which the pieces to be cut are located in the optical axis,
cutting the pieces out of the specimen, and
collecting the pieces by lowering a collecting and adhesion device, which is centred on the optical axis, onto the specimen, wherein the collection and adhesion device in the lowered state sticks to the specimen, is freely movable with the slide and is uncoupled from the optical axis of the microscope, and in the raised state is fixed relative to the optical axis,
wherein, when the next piece to be collected is located outside a given collecting radius of the collecting and adhesion device, the following steps are performed:

raising the collecting and adhesion device,
moving the slide to a position P-D relative to the optical axis of the microscope, wherein the centre of the next piece to be collected is placed off-centre from the optical axis of the microscope by a distance D such that, after lowering of the collecting and adhesion device, the piece does not encounter a section which has already been removed on the collecting and adhesion device,
lowering the collecting and adhesion device onto the specimen, and
adhering one or more of the next pieces to the collecting and adhesion device,

wherein, after each time the device is raised, the position P-D is remote from all previously defined positions by at least the distance D.

3. Method according to claim 1 or 2, wherein the distance D is defined by the maximum size of the dissected pieces.

4. Method according to claim 1, 2 or 3, wherein the positions are located successively on a spiral path.

5. Method according to any of the preceding claims, wherein the collecting and adhesion device in the lowered state rests on the specimen in planar fashion.

6. Method according to any of the preceding claims, wherein the collecting and adhesion device in the lowered state rests on the specimen with a controlled contact pressure.

7. Method according to any of the preceding claims, wherein, after the step of mounting the specimen, the pieces to be cut are predetermined and, after any step of raising the device, the slide is moved relative to the collecting and adhesion device in such a way that the collecting and adhesion device is located above a region of the slide which is free from specimen material, wherein then the number and/or area of the cut pieces is determined and compared with the number and/or area of the predetermined pieces to be cut.

8. Method according to claim 7, wherein predetermination comprises fixing a limit value for the difference between the predetermined number and/or area of pieces to be cut and the measured number and/or area of pieces to be cut.

9. Method according to claim 7 or 8, wherein the step of comparison is performed using image analysis software.

10. Method according to any of claims 7 to 9, wherein, after the step of comparison, the collecting and adhesion device is moved back over the specimen in order to cut pieces which have not been cut or adhered according to the results of comparison and to adhere them to the collecting and adhesion device.

11. Method according to any of claims 7 to 10, wherein, after the step of comparison, unwanted, unpredetermined specimen material is removed from the collecting and adhesion device by laser ablation.

12. Laser dissection microscope for carrying out the method for cutting and collecting dissected pieces from specimens according to claim 1 or 2, comprising

a slide (21) for receiving a preferably biological specimen (22), wherein the slide is freely movable in its plane,
a collecting and adhesion device (111) which can be lowered onto the specimen on the slide and raised off it and sticks to the specimen in the lowered state,
an adjusting mechanism (122) for centring the cap on the optical axis (15), and
a height-adjusting means (121) by means of which the collecting and adhesion device (111) can be adjusted in height in relation to the slide (21), wherein the collecting and adhesion device (111) can occupy at least two different positions, on the one hand a top, raised position and on the other hand a bottom, lowered position, **characterised in that** the collecting and adhesion device (111) in the lowered state is freely movable with the slide and is uncoupled from the optical axis (15) of the microscope, and in the raised state is fixed relative to the optical axis (15).

13. Laser dissection microscope according to claim 12, further comprising a magnet (124) for controlling the contact pressure of the collecting and adhesion device (111).

14. Laser dissection microscope according to claim 13, wherein the magnet (124) is capable of being freely advanced, so that the relative distance from the collecting and adhesion device to the specimen (22) can be adjusted.

15. Laser dissection microscope according to claim 12, 13 or 14, wherein the distance between collecting and adhesion device (111) and specimen (22) is adjustable.

16. Laser dissection microscope according to any of claims 12 to 15, further comprising a plurality of collecting and adhesion devices or an array of collecting and adhesion devices.

**Revendications**

1. Procédé de découpe et de collecte d'éléments de dissection à partir d'échantillons, avec les étapes suivantes :

- application d'un échantillon sur un support d'un microscope de dissection au laser, lequel support peut être déplacé dans son plan,
- centrage d'un dispositif d'adhérence collecteur relevé (111) sur l'axe optique (15),
- déplacement (S102) du support dans une position P dans laquelle le premier élément de dissection à découper se trouve dans l'axe optique,
- abaissement (S103) du dispositif d'adhérence collecteur (111), centré sur l'axe optique (15), sur l'échantillon, lequel dispositif d'adhérence collecteur, à l'état abaissé, adhère à l'échantillon, peut être déplacé librement avec le support et est découplé de l'axe optique du microscope et, à l'état relevé, est immobilisé par rapport à l'axe optique,
- découpe (S104) d'un ou plusieurs éléments de dissection sur l'échantillon et, lorsque l'élément de dissection à découper suivant se trouve en dehors d'un rayon de collecte prédéterminé (S) du dispositif d'adhérence collecteur, les étapes suivantes sont effectuées :

  - relèvement du dispositif d'adhérence collecteur,
  - déplacement (S102) du support dans une position P-D par rapport à l'axe optique du microscope, le centre de l'élément de dissection à découper suivant étant décentré d'une distance D par rapport à l'axe optique du microscope de telle sorte que, après l'abaissement du dispositif d'adhérence collecteur, l'élément de dissection n'arrive pas sur une coupe déjà prélevée sur le dispositif d'adhérence collecteur,
  - abaissement (S103) du dispositif d'adhérence collecteur sur l'échantillon,
  - déplacement du support dans une position prédéterminée dans laquelle l'élément de dissection à découper se trouve dans l'axe optique (15) et
  - découpe (S104) d'une ou plusieurs éléments de dissection suivants,
  après chaque relèvement, la position P-D étant éloignée d'au moins la distance D par rapport à toutes les positions déterminées auparavant.

2. Procédé de découpe et de collecte d'éléments de dissection sur des échantillons, avec les étapes suivantes :

  - application d'un échantillon sur un support d'un microscope de dissection au laser, lequel support peut être déplacé dans son plan,
  - déplacement du support dans une position P dans laquelle les éléments de dissection à découper se trouvent dans l'axe optique,
  - découpe des éléments de dissection sur l'échantillon et
  - collecte des éléments de dissection par abaissement d'un dispositif d'adhérence collecteur, centré sur l'axe optique, sur l'échantillon, lequel dispositif d'adhérence collecteur, à l'état abaissé, adhère à l'échantillon, peut être déplacé librement avec le support et est découplé de l'axe optique du microscope et, à l'état relevé, est immobilisé par rapport à l'axe optique,

  lorsqu'un élément de dissection à découper suivant se trouve en dehors d'un rayon de collecte prédéterminé du dispositif d'adhérence collecteur, les étapes suivantes sont effectuées :

  - relèvement du dispositif d'adhérence collecteur,
  - déplacement du support dans une position P-D par rapport à l'axe optique du microscope, le centre de l'élément de dissection à découper suivant étant décentré d'une distance D par rapport à l'axe optique du microscope de telle sorte que, après l'abaissement du dispositif d'adhérence collecteur, l'élément de dissection n'arrive pas sur une coupe déjà prélevée sur le dispositif d'adhérence collecteur,
  - abaissement du dispositif d'adhérence collecteur sur l'échantillon et
  - adhérence d'un ou plusieurs éléments de dissection suivants au dispositif d'adhérence collecteur,

  après chaque relèvement, la position P-D étant éloignée d'au moins la distance D par rapport à toutes les positions déterminées auparavant.

3. Procédé selon la revendication 1 ou 2, dans lequel la distance D est définie par la dimension maximale des éléments de dissection.

4. Procédé selon la revendication 1, 2 ou 3, dans lequel les positions se trouvent les unes derrière les autres sur une trajectoire en forme de spirale.

5. Procédé selon l'une quelconque des revendications précédentes, dans lequel le dispositif d'adhérence collecteur

à l'état abaissé repose à plat sur l'échantillon.

6. Procédé selon l'une quelconque des revendications précédentes, dans lequel le dispositif d'adhérence collecteur à l'état abaissé repose avec une pression exercée de manière contrôlée sur l'échantillon.

7. Procédé selon l'une quelconque des revendications précédentes, dans lequel, après l'étape d'application de l'échantillon, les éléments de dissection à découper sont prédéterminés et, après une étape quelconque du relèvement, le support peut être déplacé par rapport au dispositif d'adhérence collecteur de telle sorte que le dispositif d'adhérence collecteur se trouve au-dessus d'une zone du support exempte de matière d'échantillon, le nombre et/ou la surface des éléments de dissection découpés étant alors déterminés et comparés respectivement au nombre et à la surface des éléments de dissection à découper prédéterminés.

8. Procédé selon la revendication 7, dans lequel la prédétermination comprend la spécification d'une valeur limite pour la différence du nombre et/ou de la surface entre nombre ou surface prédéterminés et déterminés des éléments de dissection à découper.

9. Procédé selon la revendication 7 ou 8, dans lequel l'étape de comparaison est effectuée à l'aide d'un logiciel d'analyse d'image.

10. Procédé selon l'une quelconque des revendications 7 à 9, dans lequel le dispositif d'adhérence collecteur après l'étape de comparaison est redéplacé au-dessus de l'échantillon pour, en fonction des résultats de comparaison, découper des éléments de dissection non découpés ou non adhérents et les faire adhérer au dispositif d'adhérence collecteur.

11. Procédé selon l'une quelconque des revendications 7 à 10, dans lequel, après l'étape de comparaison, de la matière d'échantillon non souhaitée et non prédéterminée est éliminée du dispositif d'adhérence collecteur par ablation au laser.

12. Microscope de dissection au laser destiné à la mise en oeuvre du procédé de découpe et de collecte d'éléments de dissection sur des échantillons selon la revendication 1 ou 2, comprenant :

 - un support (21) destiné à recevoir un échantillon (22) de préférence biologique, le support pouvant être déplacé librement dans son plan,
 - un dispositif d'adhérence collecteur (111), qui peut être abaissé sur l'échantillon sur le support et être relevé au-dessus de ceux-ci et qui adhère à l'échantillon à l'état abaissé,
 - un mécanisme de réglage (122) destiné à centrer le dispositif d'adhérence collecteur sur l'axe optique (15), et
 - un réglage en hauteur (121), à l'aide duquel le dispositif d'adhérence collecteur (111) peut être réglé en hauteur par rapport au support (21), le dispositif d'adhérence collecteur (111) pouvant prendre au moins deux positions différentes, d'une part une position relevée, supérieure, et d'autre part une position abaissée, inférieure,

 **caractérisé en ce que** le dispositif d'adhérence collecteur (111), à l'état abaissé, peut être déplacé librement avec le support et est découplé de l'axe optique (15) du microscope et, à l'état relevé, est immobilisé par rapport à l'axe optique (15).

13. Microscope de dissection au laser selon la revendication 12, comprenant en outre un aimant (124) destiné à commander la pression exercée par le dispositif d'adhérence collecteur (111).

14. Microscope de dissection au laser selon la revendication 13, dans lequel l'aimant (124) peut être dosé librement de telle sorte que la distance relative du dispositif d'adhérence collecteur à l'échantillon (22) puisse être réglée.

15. Microscope de dissection au laser selon la revendication 12, 13 ou 14, dans lequel la distance entre le dispositif d'adhérence collecteur (111) et l'échantillon (22) peut être réglée.

16. Microscope de dissection au laser selon l'une quelconque des revendications 12 à 15, comprenant en outre plusieurs dispositifs d'adhérence collecteurs ou un réseau de dispositifs d'adhérence collecteurs.

# Fig. 1a

# Fig. 1b

## Fig. 2a

# Fig. 2b

# Fig. 2c

# Fig. 3

START

NEIN ← NEUES CAP — S100

JA

BESTIMME G
D = (0;0) — S101

FAHRE ZU P-D — S102

CAP ABSENKEN — S103

FAHRE ZU P; SCHNEIDE — S104

S115
NEUES
MULTICAP
EINLEGEN

S112
D = (0;0)

|P - D| > S — S105    NEIN

JA

S114
CAPLIFT
NIMMT
NÄCHSTES
CAP

S111
CAP AN-
HEBEN;
NEUES
CAP

JA ← |D| + S > CC — S106    S108
D = G(Zx,Zy)

NEIN

NEIN

NEIN

S107
LETZTES
DISSEKTAT DER
GRUPPE ?    NEIN

JA

NEIN

MULTICAP
VOLL? — S113

JA

JA

S110
MULTI CAP
?    NEIN ← LETZTE
GRUPPE ? — S109    JA → ENDE

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20100866 U
- US 5998129 A
- WO 0133190 A2
- US 2006087643 A1
- WO 9900658 A